(19) Europäisches Patentamt
European Patent Office
Office européen des brevets

(11) **EP 4 026 990 A1**

(12) **EUROPÄISCHE PATENTANMELDUNG**

(43) Veröffentlichungstag:
**13.07.2022  Patentblatt 2022/28**

(21) Anmeldenummer: **22150650.4**

(22) Anmeldetag: **10.01.2022**

(51) Internationale Patentklassifikation (IPC):
***F01M 1/08*** (2006.01)          ***F01P 3/08*** (2006.01)
***F01P 3/10*** (2006.01)

(52) Gemeinsame Patentklassifikation (CPC):
**F01M 1/08; F01P 3/08; F01P 3/10**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **11.01.2021  CH 172021**

(71) Anmelder: **Liebherr Machines Bulle SA
1630 Bulle (CH)**

(72) Erfinder:
• **PALMISANI, Domenico
10044 Pianezza (IT)**
• **CAVAZZONI, Andrea
10135 Turin (IT)**
• **BAECHLER, Pierre-Vincent
1610 Oron (CH)**

(74) Vertreter: **Laufhütte, Dieter
Lorenz Seidler Gossel
Rechtsanwälte Patentanwälte
Partnerschaft mbB
Widenmayerstraße 23
80538 München (DE)**

(54) **BRENNKRAFTMASCHINE MIT DÜSENANORDNUNG ZUR KÜHLUNG UND SCHMIERUNG DER KOLBEN-PLEUEL-BAUGRUPPE**

(57)    Die Erfindung betrifft eine Brennkraftmaschine mit wenigstens einem Brennraum und einem darin beweglich gelagerten Kolben, der mit einem Ende einer Pleuelstange gelenkig verbunden ist, und einen Kolbenboden mit Mulde aufweist, wobei unterhalb der Mulde ein Hohlraum durch den Kolbenboden verläuft, und wobei mindestens zwei separate Ölzuführungen vorgesehen sind, um das Öl einerseits dem Hohlraum des Kolbens und anderseits der Verbindungsstelle zwischen Kolben und Pleuelstange zuzuführen.

**EP 4 026 990 A1**

**EP 4 026 990 A1**

**Beschreibung**

Die Erfindung betrifft eine Brennkraftmaschine mit wenigstens einem Brennraum und einem darin beweglich gelagerten Kolben, der mit einem Ende einer Pleuelstange gelenkig verbunden ist, und einen Kolbenboden mit Mulde aufweist, wobei unterhalb der Mulde ein Hohlraum durch den Kolbenboden verläuft.

Eine Brennkraftmaschine der genannten Art wird beispielsweise als Antrieb für Kraftfahrzeuge eingesetzt. Im Rahmen der vorliegenden Erfindung betrifft der Begriff Brennkraftmaschine insbesondere Dieselmotoren, aber auch Ottomotoren und Hybrid-Brennkraftmaschinen. Brennkraftmaschinen verfügen über einen Zylinderblock und mindestens einen Zylinderkopf, die zur Ausbildung der Zylinder, d.h. der Brennräume, miteinander verbunden werden.

Eine Pleuelstange der Brennkraftmaschine umfasst endseitig jeweils ein Pleuelauge, die sich in ihrer Größe voneinander unterscheiden. Über einen in dem kleinen Pleuelauge angeordneten Kolbenbolzen ist die Pleuelstange mit dem Kolben gelenkig verbunden, mit dem großen Pleuelauge ist die Pleuelstange auf einem Kurbelzapfen der Kurbelwelle drehbar gelagert. Die Gaskräfte, mit denen der Kolben bei der Verbrennung im Brennraum beaufschlagt wird, werden auf diese Weise über den Kolbenbolzen auf die Pleuelstange und von dieser auf die Kurbelwelle übertragen.

Der zunehmende Wunsch nach höheren Wirkungsgraden und höheren Leistungsdichten der Verbrennungskraftmaschinen führt zu einer vom Brennraum ausgehenden stärkeren thermischen Belastung der Kolben. Aus diesem Grund werden mitunter solche Kolben verwendet, die unterhalb der Kolbenmulde einen Kühlkanal aufweisen, der mit Motorenöl als Kühlmedium durchströmt wird. Dadurch kann eine wirkungsvollere Kühlung der kritischen Kolben-Areale erzielet werden, als dies durch das einfache Anspritzen mit Motorenöl des dem Pleuel zugewandten Bodens gewöhnlicher Kolben der Fall ist.

Aufgrund der Bewegung des Kolbens erfolgt der Ölzufluss zum Eingang seines Kühlkanals nicht über eine ummantelte Fluidverbindung. Stattdessen befindet sich längs eines Ölkanals eine Düse, aus der aufgrund ihrer Anordnung bei Vorliegen eines Öldrucks ein Ölstrahl herausschießt, der so ausgerichtet ist, dass er die Einlassbohrung des Kolben-Kühlkanals trifft. Abgesehen von einer sehr geringen und daher in diesem Kontext zu vernachlässigenden Kippbewegung führt ein Kolben eine lineare Aufwärts-/Abwärts-Bewegung aus. Indem die Düse so angeordnet ist, dass sich der Ölstrahl an der richtigen Position beginnend und parallel zu der Bewegungsachse des Kolbens ausbreitet, trifft dieser immer den Eingang des Kolben-Kühlkanals. Eine zweite Öffnung des Kolben-Kühlkanals dient als Ölrückführung, von dieser das Motorenöl, das entlang des Kolben-Kühlkanals geflossen ist, abtropft.

An der Unterseite des Kolbens besteht ein Bedarf von Motorenöl zur Schmierung der gemeinsamen Kontaktflächen der aus dem Kolben, dem Kolbenbolzen, dem Pleuel und dem zugehörigen Lager bestehenden Baugruppe. Zwischen dem Kolben und der Kurbelwelle liegt im gegenseitigen Wechsel eine sehr hohe mechanische Belastung vor, die klarerweise auch auf diejenigen Bauteile einwirkt, welche die mechanische Verbindung zwischen der Kurbelwelle und dem Kolben schaffen.

Daher werden auch das Pleuel und die Kurbelwelle im gegenseitigen Wechsel mit starken Kräften sowie Dreh- und Biegemomenten beaufschlagen. Die Leichtgängigkeit der zwischen dem Kolben und dem Pleuel erfolgenden Schwenkbewegung ist sehr wichtig, denn die hierbei auftretende Reibung führt nicht nur zu einer gewissen Verschlechterung des Wirkungsgrades, sondern stellt einen kritischen Ausgangspunkt eines erhöhten Verschleißes dar, der in einem fortgeschrittenen Stadium zu einer Überbelastung führen kann, die einen sofortigen Ausfall der Verbrennungskraftmaschine nach sich zieht.

Sofern die Kühlung des Kolbens durch ein einfaches Anspritzen seiner dem Pleuel zugewandten Seite mit Motorenöl erfolgt, liegt eine entsprechend weitläufige Verteilung im Bereich des Kolbenbolzens vor, weswegen eine ausreichende Schmierung der besagten Baugruppe vorliegt. Unter Verwendung eines Kolbens, der einen Kühlkanal aufweist und zum Zweck einer wirkungsvolleren Kühlung daher das Motorenöl gezielt in den Kühlkanal gespritzt wird, ist eine ausreichende Schmierung der besagten Baugruppe jedoch nicht immer erfüllt. Das den Kühlkanal eines Kolbens verlassende Motorenöl fließt von einer zweiten Öffnung an der Unterseite des Kolbens in Richtung Ölwanne, wodurch eine ausreichende Schmierung der Verbindungsstelle zwischen Kolben und Pleuel nicht garantiert werden kann.

Ausgehend von dem beschriebenen Stand der Technik war es die Aufgabe, durch gezielte Modifikation einer bekannten Brennkraftmaschine eine bessere Schmierung der gemeinsamen Kontaktflächen der Baugruppe Kolben, Kolbenbolzen, Pleuel und Lager, sicherzustellen. Insbesondere soll sich die verbesserte Schmierung im Betrieb durch eine möglichst geringe Umschlagmenge von Schmiermittel auszeichnen und kostengünstig an einer Verbrennungskraftmaschine umgesetzt werden können.

Gelöst wird die Aufgabe durch eine Brennkraftmaschine gemäß den Merkmalen des Anspruch 1. Vorteilhafte Ausführungen der Brennkraftmaschine sind Gegenstand der abhängigen Ansprüche.

Erfindungsgemäß wird für eine gattungsgemäße Brennkraftmaschine vorgeschlagen, mindestens zwei separate Ölzuführungen vorzusehen, mittels dieser Öl einerseits dem Hohlraum des Kolbens und anderseits der Verbindungsstelle des Kolbens mit der Pleuelstange zuführbar ist.

Auf diese Weise kann sichergestellt, dass zum einen dem Hohlraum ausreichend Öl zuführbar ist und andererseits eine für den Betrieb der Brennkraftmaschine ausreichende Ölversorgung der Verbindungsstelle, insbesondere

2

im Bereich der Gelenkverbindung zwischen Kolben und Pleuelstange gewahrt ist.

Vorteilhafterweise sind die wenigstens zwei Ölzuführungen unmittelbar mit demselben Ölreservoir verbunden, insbesondere mit einer gemeinsamen Ölgalerie der Brennkraftmaschine. Die Ölgalerie kann unmittelbar in den Motorblock eingegossen sein, insbesondere im Bereich des Zylinderblocks. Alternativ kann die Ölgalerie auch ein separates, insbesondere rohrförmiges Anbauteil für den Motorblock sein.

Gemäß vorteilhafter Ausführung kann es sich bei dem Hohlraum des Kolbens um einen Kühlkanal handeln. Durch den Kanal strömendes Öl dient dabei zur Kolbenkühlung, insbesondere des Bereichs um die Kolbenmulde. Das notwendige Öl zur Kühlung wird in den Kühlkanal durch ein der wenigstens zwei Ölzuführungen eingebracht.

Besonders vorteilhaft ist es, wenn wenigstens eine der Ölzuführungen, insbesondere beide Ölzuführungen düsenartig bzw. als Düsen ausgeführt sind. Der abgegebene Ölstrahl der jeweiligen Düse dient zur Versorgung des Hohlraums bzw. der Verbindungsstelle mit der notwendigen Ölmenge. Vorzugsweise wird eine erste Düse zur Einbringung des Motorenöls in den Kolben-Kühlkanal und eine zweite Düse zur Schmierung der besagten Baugruppe bestehend aus Kolben und Pleuel bzw. Kolbenbolzen und Lager vorgesehen.

Bevorzugt werden die beiden Düsen so fixiert, dass diese über eine Radialbohrung durch die Wandung des Motorblocks bzw. der Ölgalerie einen unmittelbaren Ölzufluss über möglichst kurze Zuleitungen erhalten. Besonders bevorzugt befindet sich die Radialbohrung an einer Stelle, die von der Unterseite des Motorblocks zugänglich ist, was die Fertigstellung der hierfür vorgesehenen Öffnungen aus dem Motorblock-Gussrohling vereinfacht. Dies gilt auch für das Anbringen etwaiger Leitungen, durch die das Motorenöl zu den Düsen hingeführt wird bzw. ein derartiges Anbringen der Düsen, was einen möglichst unmittelbaren Ölpfad zwischen der Ölgalerie und den Zuleitungsanschlüssen der Düsen ermöglicht.

Für die Anwendung ist es ausreichend, dass das Spraybild des aus den Düsen austretenden Ölstrahls eine eher geringe Aufweitung aufweist. Daher sieht eine bevorzugte Ausführungsform vor, dass der Rohrdurchmesser der Düse dem Durchmesser der Zuleitung entspricht. Vorstellbar ist es zudem, dass eine Düse nicht durch ein separates Element gebildet wird, welches sich strömungsabwärts an der Zuleitung anschließt, sondern stattdessen die Zuleitung und die Düse durch ein Rohr mit gleichbleibendem Strömungsquerschnitt gebildet sind. Auf diese Weise wird durch die dem Öl während seiner Durchströmung der Düse aufgezwungenen Bewegungsrichtung die Richtung des aus der Düse austretenden Ölstrahls festgelegt.

Bevorzugt bestehen die Leitungen der Düse und/oder Zuleitung zumindest abschnittsweise aus einem festen, nicht biegsamen Material, so dass eine einzige Fixierung ausreichend ist, um Relativbewegungen zwischen den Öl-Austrittsenden der Düsen und dem Motorblock zu vermeiden. Derartige Relativbewegungen können im Motorbetrieb durch beim Einsetzen der Expansionsphasen hervorgerufenen Stöße auftreten sowie durch Vibrations- sowie Schockbelastungen, denen die Verbrennungskraftmaschine in ihren möglichen Anwendungen ausgesetzt sein kann, hervorgerufen werden.

Ergänzend oder alternativ sind die mehreren Düsen, die jeweils einem Brennraum bzw. Zylinder zugeordnet werden können, direkt oder indirekt auf einer Trägerplatte angebracht, wobei die Trägerplatte an dem Motorblock vorzugsweise über mindestens eine Schraube fixiert ist. Alternativ kann die Schraube anstatt am Motorblock selbst an einem Bauteil befestigt sein, welches seinerseits besonders fest am Motorblock fixiert ist, insbesondere dann, wenn die Ölgalerie zumindest in dem Längenabschnitt, aus der die Düsen ihr Motorenöl beziehen, nicht im Motorblock eingegossen, sondern bspw. als am Motorblock separates angebautes, z.B. rohrförmiges Bauteil, ausgeführt ist.

Besonders ist die Ausführung, bei dieser die beiden/mehreren, genau einem Brennraum bzw. Zylinder zugeordneten Düsen auf einer gemeinsamen Trägerplatte fixiert sind. Die Düsen können in diesem Fall komplett voneinander separierte Fluidverbindungen aufweisen oder aber über einen gemeinsamen Ölanschluss, insbesondere an die Ölgalerie, verfügen. Ganz besonders bevorzugt erfolgt die Fixierung einer solchen Trägerplatte über eine einzige Schraube, dies vor dem Hintergrund, um die Anzahl notwendiger Schraubverbindungen auf ein Minimum zu beschränken. Ganz besonders bevorzugt weist der Motorblock an der Anlagefläche der Trägerplatte einen Fortsatz oder eine Vertiefung auf. Je nachdem ob der Motorblock einen solchen besagten Fortsatz oder eine solche besagte Vertiefung aufweist, weist die Trägerplatte eine hierzu komplementäre Geometrie auf. Dabei sind diese beiden komplementären Volumina so platziert, dass ein Ineinandergreifen beim Anschrauben der Trägerplatte nur dann erfolgt, wenn die Anbauposition vorschriftsmäßig positioniert und damit sichergestellt ist, dass das aus den Düsen spritzende Motorenöl auf die jeweils vorgesehenen Zielpunkte bzw. Zielkorridore trifft.

In einer ganz besonders vorteilhaften Ausführung werden diese beiden komplementären Geometrien durch eine Bohrung im Motorblock respektive in der Wand der Ölgalerie gebildet, wobei die Bohrung zum Anschluss einer Düse oder Zuführleitung einer Düse dient. Insbesondere dient die Bohrung dem Anschluss der zweiten Düse für die Ölzuführung an die Verbindungsstelle von Kolben und Pleuel. Besonders bevorzugt ist es, wenn der Endabschnitt der zugeordneten zweiten Düse in diese Bohrung hineinragt und damit die zur Bohrung komplementäre Geometrie der zweiten Düse bildet. Da der Anteil zur Schmierung der Verbindungsstelle zwischen Kolben und Pleuel dank der Erfindung zielgenau erfolgt, kann die hierzu erforderliche Ölfördermenge sehr klein gehalten werden. Demzufolge genügt ein sehr kleiner Durchmesser für diese Leitung.

Bevorzugt werden die Leitungen mit ihrer jeweils zugehörigen Düse vorgefertigt. Ergänzend oder alternativ wird die Leitung für die Düse bereits auf der Trägerplatte fixiert, z.B. durch Laserschweissen. Bevorzugt befindet sich entlang der (möglichen) Ölverbindung zwischen dem Abgriff aus der Ölgalerie und der ersten Düse, welche für die Ölzuführung in den Hohlraum des Kolbens vorgesehen ist, ein Druckventil. Dabei ist es vorgesehen, dass sich das Druckventil innerhalb solcher Betriebszustände, in denen keine Ölkühlung des Kolbens erforderlich ist, einen Ölfluss verhindert. Besonders bevorzugt ist das Druckventil in derjenigen Schraube integriert, mit der die Trägerplatte, auf der die erste Düse und seine Zuleitung fixiert ist, direkt oder indirekt am Motorblock befestigt ist. In diesem Fall ist die besagte Schraube als Hohlschraube ausgeführt und stellt dabei das Ventilgehäuse dar. Die restlichen Ventilbauelemente, die bevorzugt aus einem Federelement und einem Verschlusselement bestehen, befinden sich innerhalb der Hohlschraube.

In einer Ausführungsform befindet sich unterhalb des Schraubenkopfes der Hohlschraube und strömungsabwärts des darin integrierten Druckventils mindestens eine Radialbohrung, über die bei geöffnetem Ventil die Ölverbindung fortgeführt ist. Die Ölverbindung aus der Radialbohrung kann dabei zunächst in einen Ringraum fortgeführt sein, der durch eine die Hohlraumschraube umgebende Buchse geformt ist. Die Stirnseite der Buchse ist dichtend auf der Trägerplatte aufgebracht, auf der gegenüberliegenden Stirnseite der Buchse kann ein Dichtungselement aufliegen, das vom Bund der Hohlschraube entsprechend angedrückt wird. Das Erzielen einer ausreichenden Abdichtung ist vergleichsweise einfach, da das Motorenöl lediglich einen Überdruck in der Grössenordnung von ein bis zwei bar aufweist.

Bevorzugt wird die Buchse mit einem Verfahren auf der Trägerplatte fixiert, welches ein Austreten von Motorenöl an der Stossfläche verhindert; z.B. Hartlöten oder Laserschweissen, und zwar unabhängig von dem Verfahren jeweils über den gesamten Umfang.

Die Buchse weist ihrerseits eine Radialbohrung auf. Letztere Radialbohrung kann direkt zur Ölverbindung in Richtung der Düse dienen, insbesondere der ersten Düse zur Einbringung des Öls in den Hohlraum. Diese Radialbohrung dient vorzugsweise zur Aufnahme der Leitung, über die das Motorenöl schließlich an besagte erste Düse herangeführt wird.

Bevorzugt werden auch die Trägerplatte, die Buchse und die darin zu befestigende Leitung zur ersten Düse vorgefertigt, damit die erste Düse richtig positioniert ist, sodass im Betrieb der aus der ersten Düse herausschießende Ölstrahl vollständig in den Eingang des Kolben-Kühlkanals hineinspritzt.

Im Idealfall ist die erste Düse derart ausgerichtet, dass der aus ihr austretende Ölstrahl unabhängig von der Kolbenposition innerhalb des Brennraums stets dieselbe Auftreff-Stelle am Kolben trifft. Die erste Düse spritzt das Öl bevorzugt immer senkrecht aus, d.h. parallel zur Hubrichtung des Kolbens. Idealerweise ist die erste Düse dabei so positioniert, dass dieser Ölstrahl immer in eine als Eingang des Kolben-Kühlkanals dienende Öffnung hineinspritzt.

Der Hohlraum bzw. Kühlkanal kann zudem wenigstens eine weitere Öffnung aufweisen, über diese das den Hohlraum/Kühlkanal durchströmende Öl aus dem Hohlraum austreten kann. Insbesondere kann das Öl bei entsprechender Einbaulage der Brennkraftmaschine aus dieser zweiten Öffnung schwerkraftbedingt abtropfen, vorzugsweise in das Kurbelwellengehäuse der Brennkraftmaschine.

Wie bereits vorstehend angedeutet wurde kann die zweite Düse derart ausgerichtet sein, dass der aus ihr austretende Ölstrahl die Verbindungsstelle zwischen Kolben und Pleuelstange mit Öl als Schmiermittel versorgt, insbesondere einen Kolbenbolzen der Verbindungsstelle. Damit der Auftreffpunkt des aus der zweiten Düse austretenden Ölstrahls eine synchron zur Hub-Senkbewegung des Kolbens auftretende relative Wanderbewegung in Längsrichtung des Kolbenbolzens ausführt und dabei den gesamten freiliegenden Längenbereich des Kolbenbolzens überstreicht, muss der aus der zweiten Düse 2 austretende Ölstrahl unter einem bestimmten Winkel zur Hubachse des Kolbens abgegeben werden. Die Ausbreitungsrichtung des von der zweiten Düse ausgehenden Ölstrahls kann relativ zu zwei Ebenen E1, E2 beschrieben werden, deren Schnittgerade die Längsachse der Hub-Senkbewegung des Kolbens ist und deren Schnittwinkel 90° beträgt. Ferner verläuft die Ebene E1 durch die Längsachse des Kolbenbolzens. Damit der Auftreffpunkt des aus der zweiten Düse austretenden Ölstrahls eine synchron zur Hub-Senkbewegung des Kolbens auftretende relative Wanderbewegung in Längsrichtung des Kolbenbolzens ausführt und dabei den gesamten freiliegenden Längenbereich des Kolbenbolzens überstreicht, muss der aus der zweiten Düse austretende Ölstrahl unter einem bestimmten Winkel alpha auf die gedachte Ebene E2 auftreffen und unter einem bestimmten Winkelbereich beta auf die gedachte Ebene E1 auftreffen.

In Bezug auf seine Längsrichtung lässt sich ein Kolbenbozen in fünf Längenabschnitt untergliedern. Die beiden Endabschnitte, d.h. der erste und der fünfte Längenabschnitt befinden sich in hierfür vorgesehenen Ausnehmungen der Kolbenwand. Der mittlere Abschnitt, d.h. der dritte Längenabschnitt wird durch das kleine Pleuelauge respektive durch das Lager des kleinen Pleuelauges umschlossen. Lediglich der zweite und der vierte Längenabschnitt des Kolbenbolzens befinden sich an einer freien Oberfläche. Demzufolge sind der erste, der dritte und der fünfte Längenabschnitt nicht direkt durch den Ölstrahl erreichbar. Demzufolge wird eine ganzheitliche Schmierung der betrachteten Gelenkverbindung nur durch die Kriechfähigkeit des Motorenöls erzielt

In Relation mit dem Austrittsort des Ölstrahls an der zweiten Düse muss der Winkel beta entsprechend groß sein, sodass der Ölstrahl bei keiner Kolbenposition auf die Pleuelstange, d.h. den stangenförmigen Bauteilabschnitt des Pleuels trifft. Die Obergrenze des Winkelbereiches beta wird durch die Anforderung limitiert, dass der aus der zweiten Düse austretende Ölstrahl in keiner Kolbenposition an dem Kolbenbolzen vorbei spritzt.

In Bezug auf den Austrittsort des Ölstrahls an der zweiten Düse muss der Winkel alpha derart bemessen sein, dass der Ölstrahl im Zuge der Aufwärts-/Abwärtsbewegung des Kolbens den gesamten Längenbereich des Kolbenbolzens überstreicht. Hierdurch wird sichergestellt, dass jeweils der gesamte Längenbereich der beiden freiliegenden Längenabschnitte des Kolbenbolzens von dem Ölstrahl erfasst werden. In der bevorzugten Auslegung des Winkels alpha richtet sich bei der unteren Totpunkt-Position des Kolbens der Ölstrahl in den beginnenden Umschliessungsbereich des Kolbenbolzens durch den Kolben auf der einen Seite und in der oberen Totpunkt-Position des Kolbens richtet sich der Ölstrahl in den beginnenden Umschliessungsbereich des Kolbenbolzens durch den Kolben auf der gegenüberliegenden Seite.

In einem mittleren Bereich der Kolbenstellung trifft der aus der zweiten Düse austretende Ölstrahl auf den Aussenbereich des Pleuels im Bauteilabschnitt des kleinen Auges.

Die Richtungsvorgabe für die aus der ersten und zweiten Düse austretenden Ölstrahle wird erreicht, indem innerhalb eines Endabschnitts der jeweiligen Düse das Öl exakt in der Richtung geführt wird, in der der Strahl verlaufen soll. Der Endabschnitt der ersten Düse, welche das Öl zur Kolbenkühlung führt, weist der Endabschnitt eine Länge von bevorzugt ca. 1,5 cm auf. Der Endabschnitt der zweiten Düse, welche das Öl zur Schmierung führt, weist bevorzugt eine Länge von ca. 1 cm auf.

Die auf die besagten Ebenen E1, E2 bezogenen Winkel alpha und beta gelten für die Längsachse des aus der zweiten Düse austretenden Ölstrahls, die klarerweise identisch mit der Längsachse des Endabschnitts der zweiten Düse zusammenfällt.

Weitere Vorteile und Eigenschaften der Erfindung sollen nachfolgend anhand der in den Figuren dargestellten Ausführungsbeispiele erläutert werden. Es zeigen:

Figur 1a, 1b: zwei Prinzipdarstellungen eines Zylinders einer Brennkraftmaschine gemäß der Erfindung

Figur 2: eine Ansicht auf die Unterseite des Kolbens gemäß den Figuren 1a, 1b,

Figur 3: eine Schnittdarstellung durch den Kolben quer zur Bolzenachse,

Figuren 4a, 4b zwei Detaildarstellungen der erfindungsgemäßen Düsenanordnung,

Figur 5: eine Schnittdarstellung durch die Düsenanordnung in Einbaulage an der Ölgalerie,

Figur 6: eine Ansicht der Trägerplatte hergestellt per Stanzverfahren,

Figur 7: eine Seitenansicht auf den Kolben und Düsenanordnung entlang der Bolzenlängsachse,

Figur 8: eine Ansicht auf den Kolben und die Düsenanordnung gemäß Figur 7 mit senkrecht zur Zeichenebene verlaufender Bolzenachse und

Figur 9: eine Prinzipdarstellung zur Verdeutlichung der trigonometrischen Zusammenhänge bei der Orientierung der zweiten Düse.

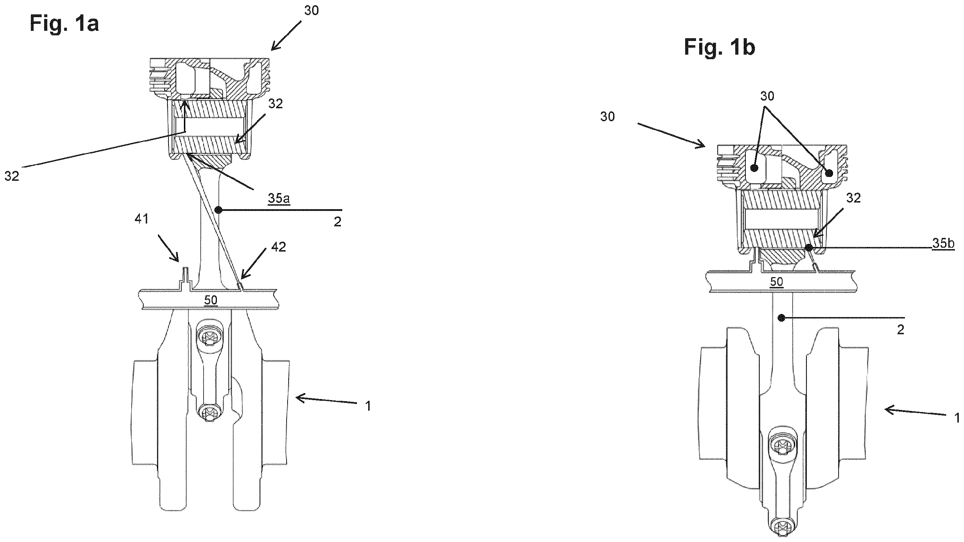

Eine Prinzipdarstellung der erfindungsgemäßen Baugruppe der Brennkraftmaschine ist in den Figuren 1a, 1b dargestellt. Die beiden Darstellungen zeigen die Bauteilepaarung aus Pleuelstange 2 und Kolben 30 für einen einzelnen Zylinder der Brennkraftmaschine. Erkennbar ist hier ein Ausschnitt der Kurbelwelle 1, auf dieser die Pleuelstange 2 gelenkig aufgenommen ist. Das gegenüberliegende Ende der Pleuelstange 2 ist mittels eines Kolbenbolzen 32 mit der Unterseite des Kolbens 30 gelenkig verbunden.

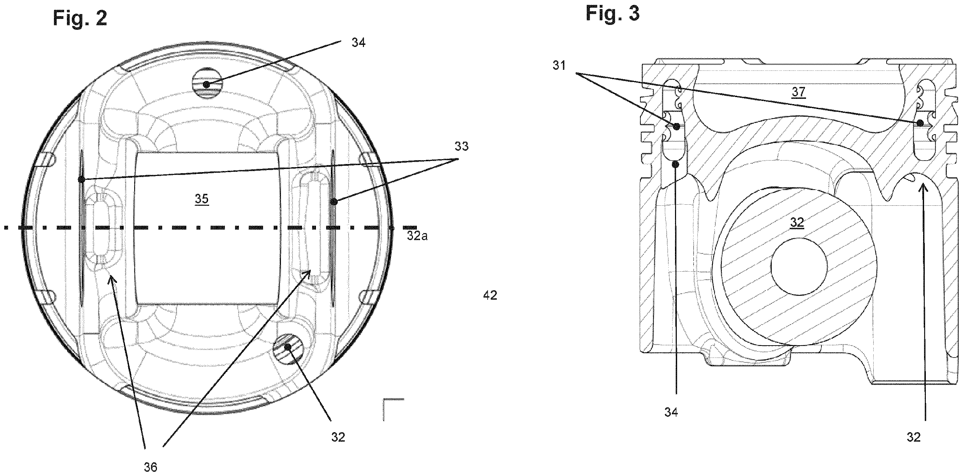

Der Kolben 30 ist mit einer Kolbenmulde 37 auf der dem Brennraum zugewandten Kolbenoberfläche ausgeführt. Ersichtlich ist dies in der Schnittdarstellung quer zur Bolzenachse gemäß Figur 3. Unterhalb bzw. seitlich versetzt zur Mulde 37 ist ein Hohlraum im Kolben 30 vorhanden. Während des Motorbetriebs kann Motoröl durch den Hohlraum strömen, der dadurch einen Kühlkanal 31 zur Kühlung des Kolbens 30 bildet. Eine Bohrung auf der Unterseite des Kolbens 30 dient als Eintrittsöffnung für das Motoröl in den Kühlkanal 31. Eine weitere Bohrung auf der Kolbenunterseite dient als Austrittsöffnung 34. Die Bohrungen sind in Figur 2 erkennbar, die einen Blick auf die Kolbenunterseite darstellt.

Das endseitige Auge der Pleuelstange 2 wird an der Unterseite des Kolbens 30 mittels des Kolbenbolzens 32 angebolzt. Die Enden des Kolbenbolzens 32 sind durch Umfassungen 36 der Kolbenunterseite vollumfänglich aufgenommen. Der von unten sichtbare Teil des Kolbenbolzens ist in der Figur 2 durch das mit dem Bezugszeichen 35 markierte Feld gekennzeichnet, die Längsachse des Kolbenbolzens 32 ist mit dem Bezugszeichen 32a markiert. Ungefähr mittig auf der Bolzenachse 32a ist das Auge der Pleuelstange 2 gelagert. Damit ist von unten nur ein erster Abschnitt des Bolzens 32 zwischen der linken Umfassung 36 und dem Pleuelstangenauge sowie ein zweiter Bolzenabschnitt zwischen Pleuelstangenauge und rechter Umfassung 36 zugänglich. Zur Schmierung dieser zugänglichen Bereiche des Kolbenbolzens 32 mit Motoröl wird eine zweite Düse 42 vorgesehen, die einen Ölstrahl in Richtung des Kolbens 30 abgibt. Die Ausrichtung der zweiten Düse 42 ist zur senkrechten Bewegungsachse des Kolbens 30 in zwei Raumrichtungen geneigt, was nachstehend noch im Detail erläutert wird. Durch diese geneigte Düsenausrichtung wird sichergestellt, dass der abgegebene Ölstrahl der Düse 42 während der Hubbewegung des Kolbens 30 entlang der Längsachse 32a des Kolbenbolzens 32 wandert. Durch eine Neigung in einer zweiten Raumrichtung wird ebenso sichergestellt, dass der Ölstrahl während der Hubbewegung auch in einer Richtung quer zur Bolzenachse zumindest geringfügig wandert. Die sich ändernde Auftreffstelle des Düsenstrahls wird durch die Gegenüberstellung der Figuren 1a, 1b verdeutlicht. Figur 1 zeigt den Kolben 30 nahe des oberen Totpunktes, der Ölstrahl trifft dabei auf den linken freiliegenden Endbereich des Kolbenbolzens 32. Figur 1b zeigt den Kolben nahe des unteren Totpunktes, der Ölstrahl der Düse 42 trifft auf den rechts freiliegenden Endbereich des Kolbenbolzens 32.

Für die Zuführung des Motoröls in den Kühlkanal 31 des Kolbens wird eine erste Düse 41 vorgehalten, die nahezu senkrecht bzw. parallel zur Hubrichtung des Kolbens 30 einen Ölstrahl nach oben in Richtung des Kolbens 30 abgibt. Dadurch ist sichergestellt, dass der senkrecht abgegebene Ölstrahl unabhängig von der aktuellen Hubposition des Kolbens 30 stets auf dieselbe Stelle des Kolbens 30 im Bereich der Eintrittsöffnung 32 auftrifft. Das durch die Düse 41 in den Kolbenkühlkanal 31 eingebrachte Motoröl durchströmt diesen und tritt an der Ölaustrittsöffnung 34 wieder aus, von wo aus es schwerkraftbedingt unten in Richtung der Kurbelwelle 1 abtropft.

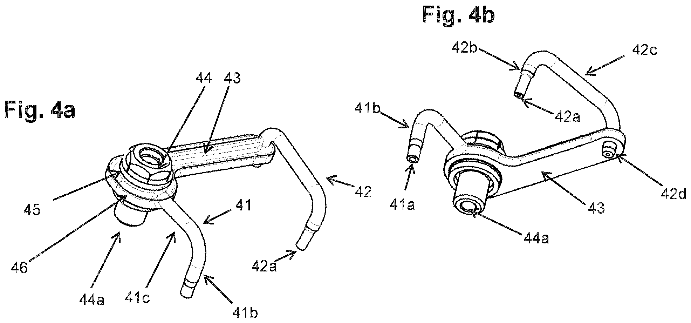

Details der erfindungsgemäßen Düsenanordnung sind in den Figuren 4a, 4b zu sehen. Beide Düsen 41, 42 sind auf einer gemeinsamen Trägerplatte 43 fixiert, wobei die Bauteilgruppe aus Trägerplatte 43 einteilig oder auch mehrteilig gefertigt sein kann. Die Trägerplatte 43 dient zur Montage der Düsenanordnung an einer Wand der Ölgalerie 50, und zwar ungefähr in Höhe der Kurbelwelle 1. Die Trägerplatte 43 ist stabähnlich ausgeführt, wobei die Düsen 41, 42 an den jeweiligen Stabenden sitzen. Für die erste Düse 41 ist eine erste Bohrung vorgesehen, in diese eine Buchse 45 zur Aufnahme einer Hohlschraube 44 einsetzbar ist. Die Düsenleitung 41c erstreckt sich unmittelbar von der Stirnseite der Trägerplatte 43 und sieht weiterhin eine Biegung in Richtung des Kolbens 30 vor, so dass der über die Düsenöffnung 41a abgegebene Ölstrahl parallel zur Hubrichtung des Kolbens verläuft. Die Holschraube 44 sieht eine Zuleitungsöffnung 44a vor, die bei entsprechende Montage innerhalb der Ölgalerie 50 liegt. Innerhalb der Hohlschraube ist ein Druckventil vorgesehen, das bei Erreichen eines Mindestdrucks, bspw. 1bar, die Fluidverbindung von der Öffnung 44a zu einer Radialbohrung der Hohlschraube öffnen. Über diese Radialbohrung kann das Öl in den durch die Buchse 45 und Trägerplatte 43 Ringraum strömen, von wo aus es zur Düsenleitung 41c weitergelangt und letztendlich über die Düsenöffnung 41a abgegeben wird.

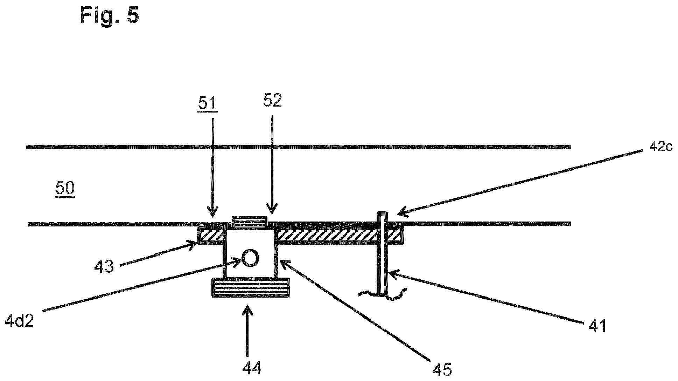

Wie dies der Schnittdarstellung der Figur 5 zu entnehmen ist, ist in der Wand der Ölgalerie eine passende Bohrung mit Innengewinde 52 vorgesehen, in diese die Hohlschraube eingesetzt und verschraubt werden kann. Dadurch lässt sich die Trägerplatte mit der Wand der Ölgalerie 50 verschrauben, wodurch gleichzeitig die Zuführöffnung 44a für die Düse 41 in die Ölgalerie eintaucht. Ergänzend kann noch eine gesonderte Dichtung 51 zwischen Wand der Ölgalerie 50 und Trägerplatte 43 eingebracht sein.

Das zweite Ende der Trägerplatte 43 weist eine zweite Rohrdurchführung für die zweite Düse auf. Auch die Düse 42 weist einen sich von der Trägerplatte 43 erstreckenden Düsenabschnitt 42c auf, der einem Biegung nach oben in Kolbenrichtung zur Ausbildung des Düsenabschnitts 42b umfasst. Anders als der Abschnitt 41b verläuft dieser Abschnitt 42b jedoch nicht parallel zur Hubrichtung, sondern gegenüber der Hubachse geneigt, um die gewünschte Orientierung des abgegebenen Ölstrahls zu erreichen. Auf der der Ölgaleriewand zugewandten Seite der Trägerplatte weist die Düsenleitung einen Fortsatz 42d auf, der bei entsprechender Montage der Trägerplatte 43 an der Wand der Ölgalerie durch eine zugeordnete kleinere Bohrung durchgeführt ist und in die Ölgalerie eintaucht. Dieser Fortsatz dient gleichermaßen als Montagehilfe als auch zur Ölzuführung aus der Galerie 50 in die Düse 42.

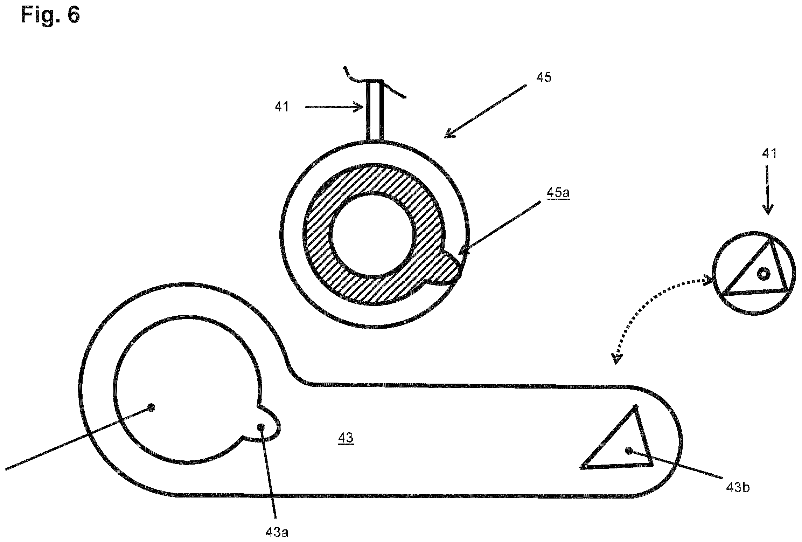

Da für die Düsenanordnung die Orientierung der Düsen evident wichtig ist, kann die Kombination aus Trägerplatte 43 und Düsenleitungen 41, 41a, 41b, 41c, 42, 42a, 42b, 42c, 42d als einteilige Bauteil per 3D-Druck hergestellt werden. Bei einer kostenoptimierten Ausführung wäre es möglich, nicht die gesamte vorgenannte Baueinheit per 3D-Druck herzustellen, sondern lediglich die Düsenleitungen 41, 41a, 41b, 41c, 42, 42a, 42b, 42c, 42d. Die Trägerplatte 43 könnte mittels alternativen Herstellungsverfahren wie Stanzen bereitgestellt werden. In diesem Fall muss auf die richtige Positionierung der Düsen auf der Trägerplatte bei der Montage geachtet werden. Geeignete Positionierhilfen, wie bspw. in Figur 6 gezeigt, erweisen sich in diesem Fall als vorteilhaft. Hier wird in der Bohrung für die erste Düse 41 bspw. eine Ausnehmung 43a für eine komplementäre Nase 45a der Düse 1 bzw. des Ringkörpers 45 vorgesehen, wodurch die exakte Ausrichtung der Düse relativ zur Trägerplatte 43 sichergestellt wird. Geeignete komplementäre Ausformungen können auch für die Bohrung 43b zur Aufnahme der zweiten Düse 42 vorgesehen sein.

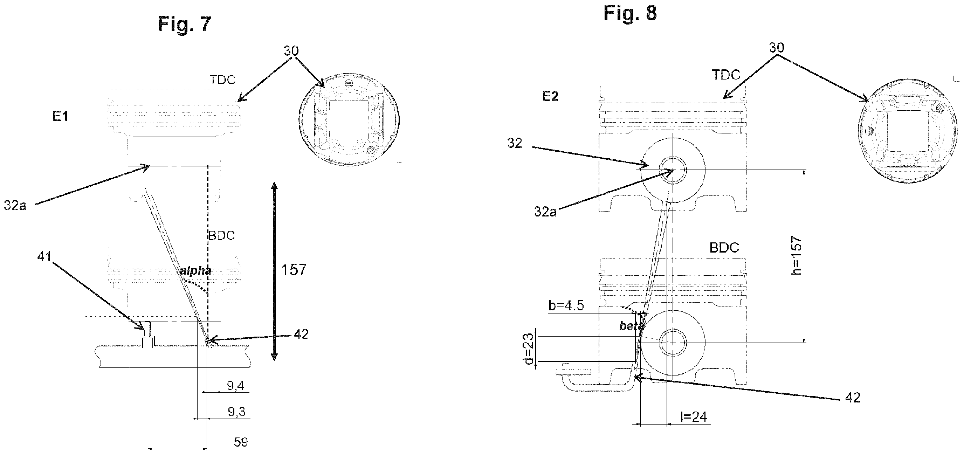

Anhand der Figuren 7 - 9 sollen die trigonometrischen Zusammenhänge für die Ausrichtung der zweiten Düse 42 erläutert werden. Die Figur 7 zeigt eine Seitenansicht auf die Düsenanordnung und Kolben 30, bei dieser die Längsachse 32a des Kolbenbolzens 32 parallel zur Zeichenebene liegt. Zur Verdeutlichung der Perspektive ist zusätzlich eine Ansicht der Unterseite des Kolbens eingeblendet. Zur Beschreibung der Düsenorientierung wird eine theoretische Ebene E1 definiert, die parallel zur Zeichnungsebene der Figur 7 verläuft und durch die Längsachse des Kolbenbolzens 32 gespannt ist.

Die Figur 8 zeigt die Ansicht des Kolbens 30 und der Düsenanordnung, bei dieser sich die Bolzenachse 32a senkrecht zur Zeichenebene erstreckt. Die Figur 8 ist demzufolge eine um eine senkrechte Achse um 90 ° rotierte Ansicht des Kolbes 30 bzw. der Düsenanordnung gegenüber der Figur 7. Die hier durch die Zeichenebene aufgespannte Ebene wird als Ebene E2 bezeichnet. Die beiden Ebenen E1, E2 sind derart orientiert, dass deren Schnittgerade die Längsachse der Hubsenkbewegung des Kolbens ist, der entsprechende Schnittwinkel 90° beträgt. In der Ebene E2 soll die Strahlrichtung der Düse 42 gegenüber der Achse der Hubrichtung einen Winkel *beta* einnehmen. Bezüglich der Ebene E1 wird der entsprechende Neigungswinkel des abgegebenen Düsenstrahls der Düse 42 gegenüber der Senkrechten, d. h. der Hubbewegung des Kolbens 30 als Winkel *alpha* bezeichnet. Damit der Auftreffpunkt des aus der zweiten Düse 42 austretenden Ölstrahls eine synchron zur Hubsenkbewegung des Kolbens 30 auftretende relativ Wanderbewegung in Längsrichtung des Kolbenbolzens 32 ausführt und dabei den gesamten freiliegenden Längenbereich des Kolbenbolzens 32 überstreicht, muss der aus der zweiten Düse 42 austretende Ölstrahl unter einem bestimmten Winkel alpha auf die gedachte Ebene E2 auftreffen und unter einem bestimmten Winkelbereich beta auf die gedachte Ebene E1 auftreffen.

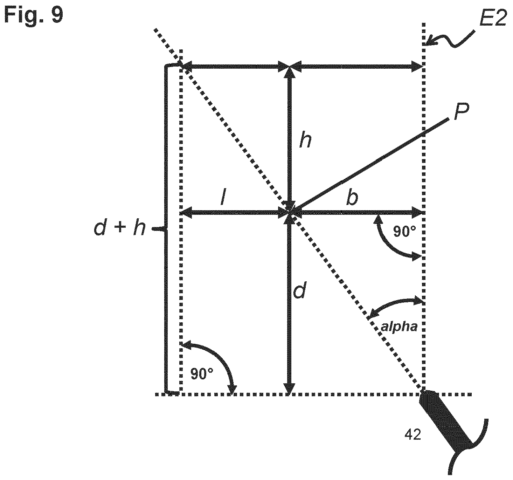

Diese trigonometrischen Zusammenhänge sind nochmals in der Prinzipdarstellung der Figur 9 verdeutlicht. Darin bezeichnet h den Kolbenhub und I den Abstand der beiden Endpunkte 35a, 35b (siehe Figuren 1a, 1b), zwischen denen der Ölstrahl auf den Kolbenbolzen 32 auftreffen soll. Der Vertikalabstand zwischen dem Spritzloch 42a der Düse 42 und der Oberfläche 35b des Kolbenbolzens 32, auf die der Ölstrahl auftritt, wenn sich der Kolben 30 in seiner unteren Totpunktstellung befindet soll hier mit dem Bezugszeichen d bezeichnet sein. Das Bezugszeichen b bezeichnet den Horizontalabstand zwischen dem Spritzloch 42a der Düse 42 und dem gewünschten Auftreffpunkt 35a des Ölstrahls auf dem Kolbenbolzen 32, wenn sich der Kolben in seiner unteren Totpunktstellung befindet.

Dabei muss unabhängig von der Position der Düse 42 gelten:

$$tan(alpha) = l/h \; bzw. \; alpha\alpha = arctan(l/h).$$

Für die beiden Größen b und d, welche die relative Position des Spritzlochs 42a der Düse 42 in Bezug auf den sich auf der Oberfläche des Kolbenbolzens 32 befindenden Ortspunkt P, auf den der Ölstrahl bei der unteren Totpunktstellung des Kolbens auftreffen soll, definieren, ergibt sich der folgende Zusammenhang für den Winkel alpha:

$$tan(alpha) = b/d.$$

Wie dies den Figurendarstellungen der Figuren 4A, 4B zu entnehmen ist, weisen die Rohrleitungen der Düsen 41, 42 einen konstanten Rohrdurchmesser bis zur Austrittsöffnung auf. Beide Düsen 41, 42 weisen zudem einen Endabschnitt 41b, 42b auf, der nach der Biegung einen geraden Abschnitt vorsieht, innerhalb diesem das Motoröl nicht mehr umgelenkt wird. Für die Düse 42 kann dieser Endabschnitt 42b eine Länge von ca. 0,7 cm - 1,5 cm, bevorzugt 0,8 cm - 1,3 cm, besonders bevorzugt 0,9 cm - 1,1 cm aufweisen. Die korrespondierende Länge des Endabschnitts 41b der ersten Düse 41 kann zwischen 1,2 cm - 2 cm, bevorzugt 1,3 cm - 1,8 cm, besonders bevorzugt 1,4 cm - 1,6 cm betragen.

Der Innendurchmesser der zur Schmierfunktion des Kolbenbolzens 32 dienenden Düse 42 kann zwischen 1,2 mm - 2,1 mm, bevorzugt 1,3 mm - 1,9 mm, besonders bevorzugt 1,5 mm - 1,7 mm betragen. Der Innendurchmesser der zur Kühlfunktion dienenden Düse 41 kann zwischen 2 mm - 3,5 mm betragen. Bevorzugt liegt dieser Innendurchmesser zwischen 2,5 mm - 3,2 mm, besonders bevorzugt zwischen 2,7 mm - 3 mm.

Der Winkel alpha kann zwischen 15° - 30°, bevorzugt 15° - 25°, besonders bevorzugt 18° - 22° liegen. Der dazugehörige Winkel beta bezüglich der Bezugsebene E2 kann einen Wert zwischen 65° - 90°, bevorzugt zwischen 70° - 90°, besonders bevorzugt zwischen 75° - 85° aufweisen. Der hydraulische Druck des Motorenöls, der unmittelbar beim Eintritt der Düsen 41, 42 vorliegt, kann zwischen 1bar - 2bar, bevorzugt zwischen 1,2bar - 1,8bar, besonders bevorzugt zwischen 1,4bar - 1,6bar betragen, sofern sich die Brennkraftmaschine im Leerlauf befindet. Bei Ansteigen der Drehzahl auf die Nenndrehzahl kann dieser Betriebsdruck zwischen 2,5 bar und 6 bar, bevorzugt zwischen 3 bar - 5,5 bar, besonders bevorzugt zwischen 3,5 bar - 4,5 bar liegen.

Der resultierende Volumenstrom durch die Düse 42 für die Schmierfunktion kann bei einer Nenndrehzahl der Brennkraftmaschine zwischen 0,2 l/min - 0,6 l/min, bevorzugt zwischen 0,25 l/min - 0,5 l/min, besonders bevorzugt zwischen 0,3 l/min - 0,4 l/min liegen. Der entsprechende Volumenstrom durch die Düse 41 für die Kühlfunktion kann zwischen 1 l/min - 2,5 l/min, bevorzugt zwischen 1,25 l/min - 2 l/min, besonders bevorzugt zwischen 1,5 l/min - 1,8 l/min betragen.

Das Kompressionsverhältnis der Brennkraftmaschine kann zwischen einer Untergrenze von 1:10 bis zu einer Obergrenze von 1:18 liegen.

**Patentansprüche**

1. Brennkraftmaschine mit wenigstens einem Brennraum und einem darin beweglich gelagerten Kolben, der mit einem Ende einer Pleuelstange gelenkig verbunden ist, und einen Kolbenboden mit Mulde aufweist, wobei unterhalb der Mulde ein Hohlraum durch den Kolbenboden verläuft,
**dadurch gekennzeichnet,**
**dass** mindestens zwei separate Ölzuführungen vorgesehen sind, um das Öl einerseits dem Hohlraum des Kolbens und anderseits der Verbindungsstelle zwischen Kolben und Pleuelstange zuzuführen.

2. Brennkraftmaschine nach Anspruch 1, **dadurch gekennzeichnet, dass** die wenigstens zwei Ölzuführungen unmittelbar mit demselben Ölreservoir verbunden sind, insbesondere mit einer gemeinsamen Ölgalerie des Motorblocks oder einer am Motoblock separat angebrachten Ölgalerie.

3. Brennkraftmaschine nach einem der vorstehenden Ansprüche, **dadurch gekennzeichnet, dass** der Hohlraum einen Kühlkanal durch den Kolbenboden bildet, der zu Kühlzwecken des Kolbens durch das von einer der Ölzuführungen zugeführte Öl durchströmbar ist.

4. Brennkraftmaschine nach einem der vorstehenden Ansprüche, **dadurch gekennzeichnet, dass** es sich bei den wenigstens zwei Ölzuführungen um eine erste und zweite Düse handelt.

5. Brennkraftmaschine nach Anspruch 4, **dadurch gekennzeichnet, dass** die Ölzuführungen, insbesondere die Düsen, über eine Radialbohrung durch die Wandung einer Ölgalerie der Brennkraftmaschine fixiert sind, insbesondere sind die Düsen an einer Stelle des Motorblocks fixiert, die von der Unterseite des Motorblocks zugänglich ist.

6. Brennkraftmaschine nach einem der vorstehenden Ansprüche 4 oder 5, **dadurch gekennzeichnet, dass** wenigstens eine, vorzugsweise beide Düsen einem der Düsenzuleitung entsprechenden Rohrdurchmesser aufweisen und/oder Zuleitung und Düse aus einem Rohr mit gleichbleibendem Innendurchmesser gebildet sind, wobei vorzugsweise die erste und zweite Düse unterschiedliche Rohrdurchmesser aufweisen, insbesondere ist der Rohrdurchmesser der ersten Düse größer als derjenige der zweiten Düse.

7. Brennkraftmaschine nach einem der vorstehenden Ansprüche 4 bis 6, dadurch gelkennzeichnet, dass wenigstens eine der Düsen auf einer Trägerplatte, insbesondere beide Düsen auf separaten oder einer gemeinsamen Trägerplatte mittelbar oder unmittelbar angeordnet sind, wobei die Trägerplatte über wenigstens ein Verbindungsmittel, insbesondere eine Schraube, am Motorblock fixiert ist.

8. Brennkraftmaschine nach Anspruch 7, **dadurch gekennzeichnet, dass** der Motorblock oder die Ölgalerie an der Anlagefläche der Trägerplatte einen Fortsatz oder eine Vertiefung und die Trägerplatte eine dazu komplementäre Geometrie aufweist, wobei die komplementäre Geometrie der Trägerplatte vorzugsweise Bestandteil wenigstens einer an der Trägerplatte angeordneten Düse ist, insbesondere der zweiten Düse zur Ölzuführung an die Verbindungsstelle.

9. Brennkraftmaschine nach einem der vorstehenden Ansprüche 7 oder 8, **dadurch gekennzeichnet, dass** die Trägerplatte über eine Hohlschraube am Motorblock oder der Ölgalerie fixierbar ist, wobei die Hohlschraube eine ein Druckbegrenzungsventil vorsieht, das eine fluide Verbindung zwischen einer Zuführleitung aus der Ölgalerie und der ersten Düse ermöglicht.

10. Brennkraftmaschine nach einem der Ansprüche 4 bis 9, **dadurch gekennzeichnet, dass** die Düsen eine gemeinsame Zuleitung aus dem Ölreservoir, insbesondere der Ölgalerie, oder separate Zuleitungen aufweisen.

11. Brennkraftmaschine nach einem der Ansprüche 4 bis 10, **dadurch gekennzeichnet, dass** die erste Düse derart ausgerichtet ist, dass der aus ihr austretende Ölstrahl unabhängig von der Kolbenposition innerhalb des Brennraums stets dieselbe Auftreff-Stelle am Kolben trifft, insbesondere eine Öffnung des Hohlraums bzw. Kühlkanals.

12. Brennkraftmaschine nach Anspruch 11, **dadurch gekennzeichnet, dass** der Hohlraum bzw. Kühlkanal wenigstens eine weitere Öffnung aufweist, über diese das den Hohlraum/Kühlkanal durchströmende Öl aus dem Hohlraum austreten, insbesondere bei der vorgesehenen Einbaulage der Brennkraftmaschine schwerkraftbedingt abtropfen kann, vorzugsweise in das Kurbelwellengehäuse der Brennkraftmaschine.

**13.** Brennkraftmaschine nach einem der vorstehenden Ansprüche 4 bis 12, **dadurch gekennzeichnet, dass** die zweite Düse derart ausgerichtet ist, dass der aus ihr austretende Ölstrahl die Verbindungsstelle zwischen Kolben und Pleuelstange mit Öl als Schmiermittel versorgt, insbesondere einen Kolbenbolzen der Verbindungsstelle.

**14.** Brennkraftmaschine nach Anspruch 13, **dadurch gekennzeichnet, dass** die Strahlrichtung der zweiten Düse geneigt zur Hubachse des Kolbens orientiert ist, insbesondere ist die Orientierung der Düse derart gewählt, so dass der Auftreffort des Ölstrahl während des Kolbenhubs entlang der Bolzenachse des Kolbenbolzens zur Verbindung mit der Pleuelstange wandert.

Fig. 1b

Fig. 1a

Fig. 3

Fig. 2

Fig. 4b

42c
42d
43
42a
44a
42b
41a
41b
42

Fig. 4a

44 43
44
41
45
46
44a
41c
41b
42a

EP 4 026 990 A1

**Fig. 5**

Fig. 6

Fig. 8

Fig. 7

Fig. 9

Europäisches
Patentamt
European
Patent Office
Office européen
des brevets

# EUROPÄISCHER RECHERCHENBERICHT

**Nummer der Anmeldung**

**EP 22 15 0650**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2017 112089 A1 (TOYOTA MOTOR CO LTD [JP]) 7. Dezember 2017 (2017-12-07) | 1-4, 10-14 | INV. F01M1/08 |
| Y | * Abbildung 1 * <br> * Absatz [0045] * <br> ───── | 5-9 | F01P3/08 F01P3/10 |
| Y | US 2014/305392 A1 (CLEMENT DENIS [FR] ET AL) 16. Oktober 2014 (2014-10-16) * Spalte 5, Zeilen 47-55 * * Abbildungen 6, 10 * <br> ───── | 5,7,8 | |
| Y | JP S50 66052 U (-) 13. Juni 1975 (1975-06-13) * Abbildungen * <br> ───── | 6 | |
| Y | US 5 503 116 A (WOLF HARRY [DE]) 2. April 1996 (1996-04-02) * Spalte 3, Zeilen 16-31 * * Abbildungen * <br> ───── | 7,8 | |
| Y | US 2016/290188 A1 (GOKAN YOSHITSUGU [JP]) 6. Oktober 2016 (2016-10-06) * Abbildungen * <br> ───── | 9 | RECHERCHIERTE SACHGEBIETE (IPC) |
| A | US 2003/221639 A1 (WENG WEIBO [US] ET AL) 4. Dezember 2003 (2003-12-04) * Absatz [0003] * <br> ───── | 1-14 | F01M F01P |

Der vorliegende Recherchenbericht wurde für alle Patentansprüche erstellt

| Recherchenort | Abschlußdatum der Recherche | Prüfer |
|---|---|---|
| Den Haag | 10. Mai 2022 | Matray, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 15 0650

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-05-2022

| Im Recherchenbericht angeführtes Patentdokument | Datum der Veröffentlichung | Mitglied(er) der Patentfamilie | Datum der Veröffentlichung |
|---|---|---|---|
| DE 102017112089 A1 | 07-12-2017 | CN 107461273 A | 12-12-2017 |
| | | DE 102017112089 A1 | 07-12-2017 |
| | | JP 6439751 B2 | 19-12-2018 |
| | | JP 2017218912 A | 14-12-2017 |
| | | US 2017350304 A1 | 07-12-2017 |
| US 2014305392 A1 | 16-10-2014 | BR 102014008653 A2 | 09-08-2016 |
| | | CN 104100348 A | 15-10-2014 |
| | | DE 14163806 T1 | 31-12-2014 |
| | | EP 2789824 A1 | 15-10-2014 |
| | | ES 2637177 T3 | 11-10-2017 |
| | | FR 3004489 A1 | 17-10-2014 |
| | | JP 6316071 B2 | 25-04-2018 |
| | | JP 2014206165 A | 30-10-2014 |
| | | KR 20140123020 A | 21-10-2014 |
| | | US 2014305392 A1 | 16-10-2014 |
| JP S5066052 U | 13-06-1975 | KEINE | |
| US 5503116 A | 02-04-1996 | DE 4344078 A1 | 29-06-1995 |
| | | EP 0659989 A1 | 28-06-1995 |
| | | US 5503116 A | 02-04-1996 |
| US 2016290188 A1 | 06-10-2016 | JP 6310879 B2 | 11-04-2018 |
| | | JP 2016188623 A | 04-11-2016 |
| | | US 2016290188 A1 | 06-10-2016 |
| US 2003221639 A1 | 04-12-2003 | KEINE | |

EPO FORM P0461

Für nähere Einzelheiten zu diesem Anhang : siehe Amtsblatt des Europäischen Patentamts, Nr.12/82